Europäisches Patentamt

European Patent Office

Office européen des brevets

(11) Publication number: **0 428 974 A2**

# EUROPEAN PATENT APPLICATION

(21) Application number: 90121611.9

(22) Date of filing: 12.11.90

(51) Int. Cl.5: **A43D 37/00**, A43D 119/00

(30) Priority: 17.11.89 IT 2242089

(43) Date of publication of application:
29.05.91 Bulletin 91/22

(84) Designated Contracting States:
**DE ES FR GB IT**

(71) Applicant: **PISARONI GIUSEPPE & C. S.N.C.**
**Via Manzoni, 7**
I-20019 Settimo Milanese (Milan)(IT)

(72) Inventor: **Pisaroni, Carlo**
**Via Libertà, 62**
**I-20019 Settimo Milanese (MI)(IT)**

(74) Representative: **Dr. Ing. A. Racheli & C.**
**Viale San Michele del Carso, 4**
**I-20144 Milano(IT)**

(54) **An apparatus and process for carrying out a tracer-guided operation, for example a roughing operation, on the edge of an upper.**

(57) The apparatus carries out a roughing operation on an edge of an upper (2) mounted on an insole (3) and supported on a movable last (1). The horizontal movements of the roughing brush (56) are determined beginning from a tracer (68) in contact with the edge to be roughed through a potentiometer, an electropneumatic transducer and a cylinder-piston unit, whose movable element operates the brush supporting arm.

FIG. 2

EP 0 428 974 A2

# AN APPARATUS AND PROCESS FOR CARRYING OUT A TRACER-GUIDED OPERATION, FOR EXAMPLE A ROUGHING OPERATION, ON THE EDGE OF AN UPPER

The present invention relates to the field of footwear machines and working, and particularly but not exclusively to a roughing operation, such as is generally carried out on the edge of an upper to make it rougher and to aid the application of an adhesive and the adhesion of a sole.

It should be noted that, although reference is made further on to roughing operations, it is not the intention in this way to limit the invention solely to this work, since it can be applied to different works, for example the application of an adhesive onto the edge of an upper.

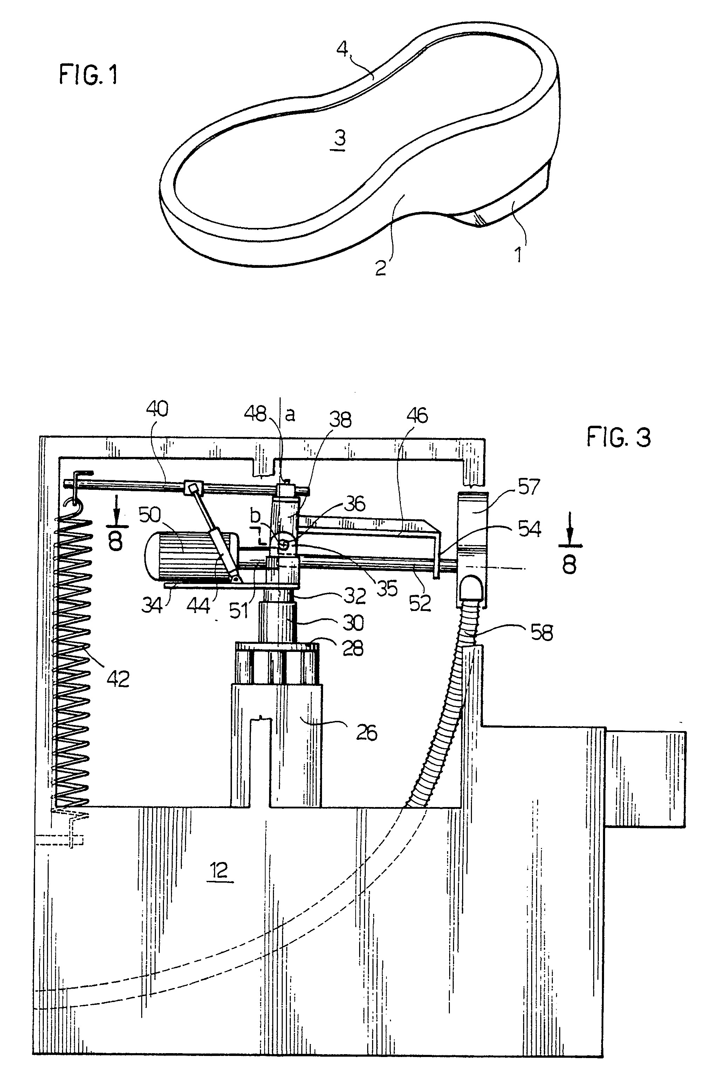

Roughing is generally carried out on the edge of an upper previously folded onto an insole of the footwear, the insole and the upper being supported by a last (figure 1); it can be carried out by means of an abrasive cloth or a metal brush and it can be performed by hand or by machine.

It is evident that if the work is carried out by hand it has the disadvantage of being long, difficult and expensive.

Machines for roughing at present on the market are usually programmable electronic machines, on which the movement of the brushes is programmed previous to beginning work on a series of footwear.

A drawback with these machines is that they are relatively complex and costly. In addition these machines are suitable for mass production, with the result that the cost of programming for small series of articles is excessive.

The aim of this invention is to avoid the drawbacks of the previous technique.

This aim has been achieved by an apparatus according to claim 1 and a process according to claim 9; in other words, the apparatus comprises a tracer suitable for being placed in contact with the edge to be roughed, a rotating roughing wheel or brush, whose shaft is supported by an oscillating arm, with means interposed between the tracer and the brush supporting arm to adjust at least partially the position of the latter on the basis of the shifting of the former determined by the detected shape.

In particular, the brush supporting arm is supported integrally with a body which is pivotable around a horizontal axis and this horizontal axis is supported on a frame which is rotatable around a vertical axis. The rotation of the frame around the vertical axis and therefore the angular or horizontal shifting of the brush, is determined from the tracer which is pressed on the same profile to be worked, through a potentiometer, an electromechanical transducer, in particular an electropneumatic one, and an actuator unit, for example a cylinder-piston unit. The vertical movement of the brush, which determines the working pressure of the brush, is determined independently by the operator by means of a cylider-piston unit, opposed by a spring which adjusts the inclination of the brush holder arm around the horizontal axis.

According to further characteristics of the invention, the tracer comprises a suitably shaped head supported on a framework and movable on the framework against the action of a spring or cylinder. The framework comprises an oscillating arm which transmits to the potentiometer the movement transmitted to the tracer by the last to be followed.

The new apparatus has the advantage of being able to be produced at moderate cost, even though working automatically; in addition, it is suitable for working on small and very small series also, since it does not incur programming costs and time.

An embodiment of the invention will now be described in an examplary and not restrictive way, with reference to the appended drawings, in which:

Figure 1 is a perspective view of a footwear last, supporting an upper and an insole, to show the edge to be roughed;

Figure 2 is a perspective view of the apparatus, seen from the front and from one side, with some parts removed;

Figure 3 is a side view of the apparatus, from the opposite side from figure 2, with some parts removed;

Figure 4 is a perspective view of the tracer unit and the related supporting framework;

Figure 4a is a perspective view of the tracer enlarged with respect to the previous figure;

Figure 5 is a block diagram of the connection between the transducer and the brush position control cylinder;

Figure 6 is a detail plan view of the tracer in contact with a footwear last; the view is enlarged with respect to figure 4;

Figure 7 is a section of the tracer unit guide block along 7-7 in figure 6;

Figure 8 is a plan view of the apparatus taken along plane 8-8 in figure 3.

With reference first of all to figure 1, a footwear last is shown with number 1, and supports an upper 2 and an insole 3. The edge 4 of the upper is folded over the insole and the exposed surface of the edge is to undergo a roughing process.

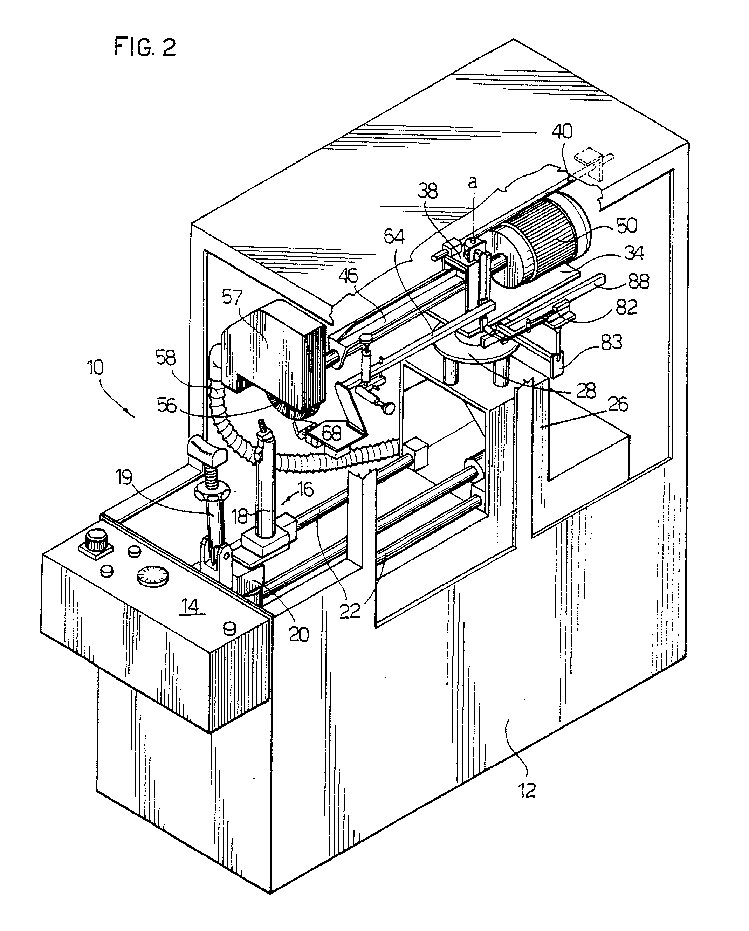

The new apparatus is shown as a whole with number 10 and comprises (figure 2) a casing 12 with a control panel 14. A unit 16 for supporting and moving the last is mounted inside the casing. The unit will not be described in detail as it is already known. Usually it comprises a pair of supports 18 and 19 (for fixing the last and for its toe-end to rest on) on a rotating head 20, which slides on horizontal bars 22. Usually the head 20 automatically completes a run equal at least to the length of the footwear, a rotation through 180°, a further run in the reversed direction as far as the starting point and a further rotation through 180°.

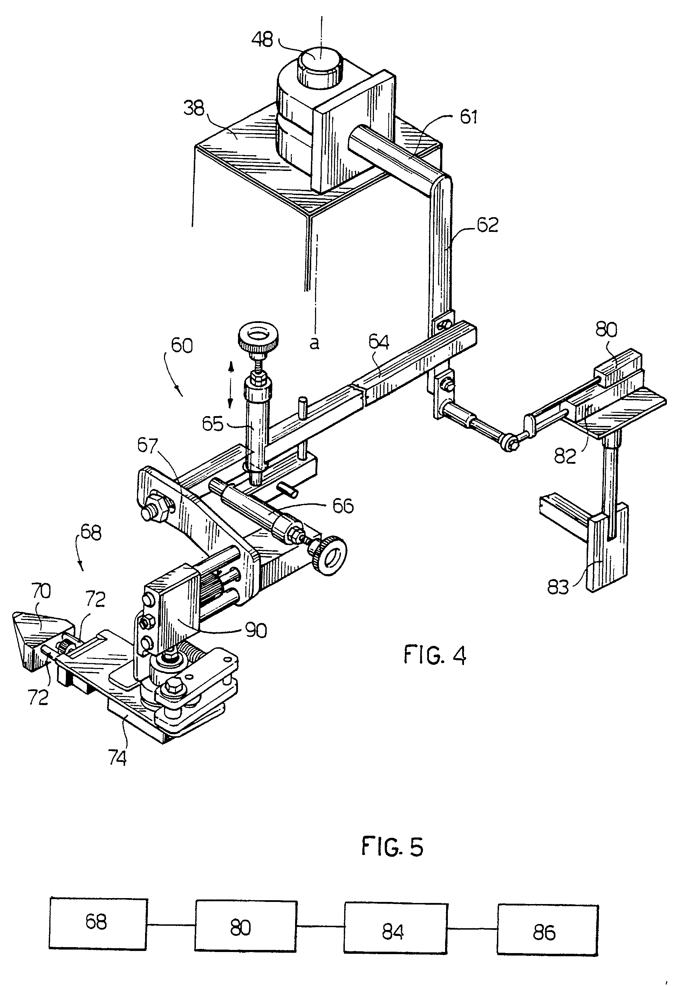

A fixed framework 26 with its upper end ending with a platform 28 is also mounted inside the casing, and a bush 30 (figure 3) on the platform defines a vertical axis of rotation a and receives a vertical support pin 32 which is rotatable around the said axis. The said pin is integral with a frame 34 extending horizontally and supporting a horizontal pin 36 on vertical arms 35, said pin defining a horizontal axis of rotation b.

A body 38 is pivoted onto the pin 36. At the top of this body an inclination rod 40 is fixed, connected to one end of a spring 42 (the other end of which is fixed to the casing) and to a shaft of a cylinder 44 (fixed to the frame 34). The cylinder adjusts the angle of the rod 40 and body 38 with respect to the frame 34, and is opposed by the spring 42.

The body 38 integrally and projectingly supports a brush supporting arm 46 and at the top a small pin 48.

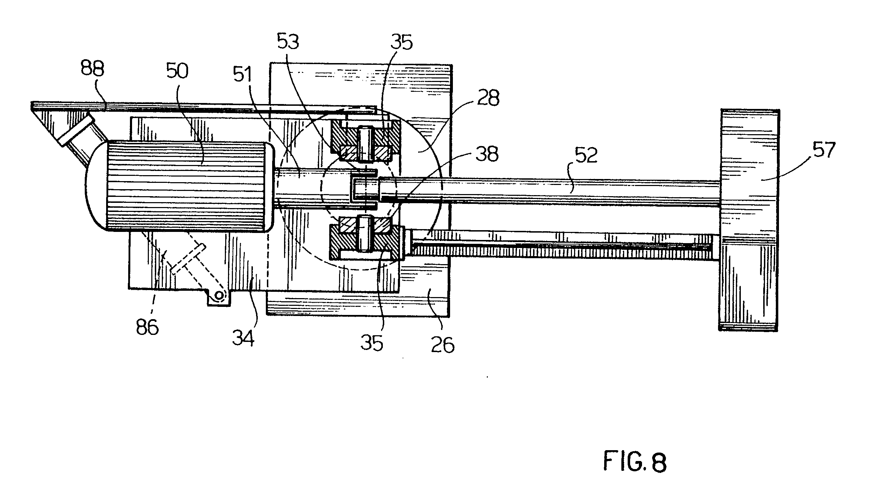

The frame 34 supports a brush rotation motor 50, to the output shaft 51 of which a brush rotation shaft 52 is connected, by means of an articulated joint 53 (figure 8), which allows for members 51, 52 to be set at an angle to each other while still allowing them to rotate integrally. A bracket 54 connects the brush supporting arm 46 to the brush rotation shaft 52.

The brush, which is already known, is shown with number 56, while number 57 shows a hood, which is also known, supported by the usual means, and number 58 shows a deposit suction tube.

It will be seen that in this way the brush and the related rotation shaft are able to be oriented both around the axis b, by operation of the cylinder 44 (that has the effect of following the vertical variations of the configuration of the edge 4 and of varying the pressure on the same), and around the axis a, by operation of means which will be described later (that has the effect of following the horizontal variations of the configuration of the edge 4).

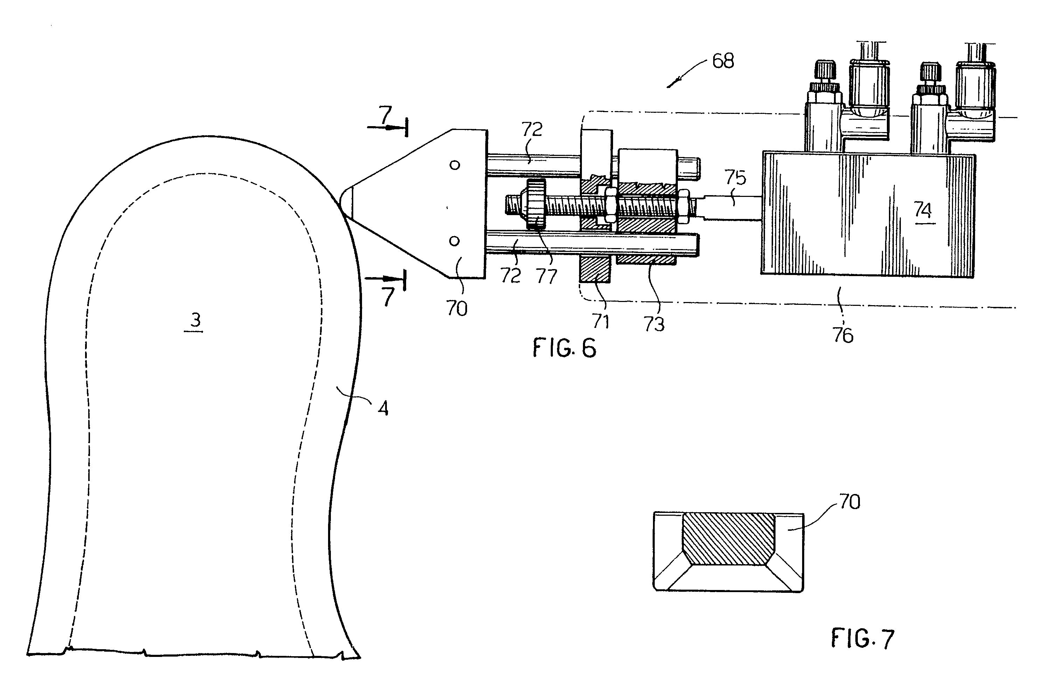

The tracer framework or mounting, shown as a whole with 60 (figure 5), is supported free to rotate on the pin 48.

Such mounting comprises an arm 61, 62, fixed to a rod 64, which supports, possibly by means of adjusting screws 65, 66, (already known and therefore not described), a tongue 67, integral with the tracer unit 68. The latter comprises a tapered or point-shaped tracer head 70 (figure 7), which is preferably triangular in plan view, and is integral with parallel rods 72, 72.

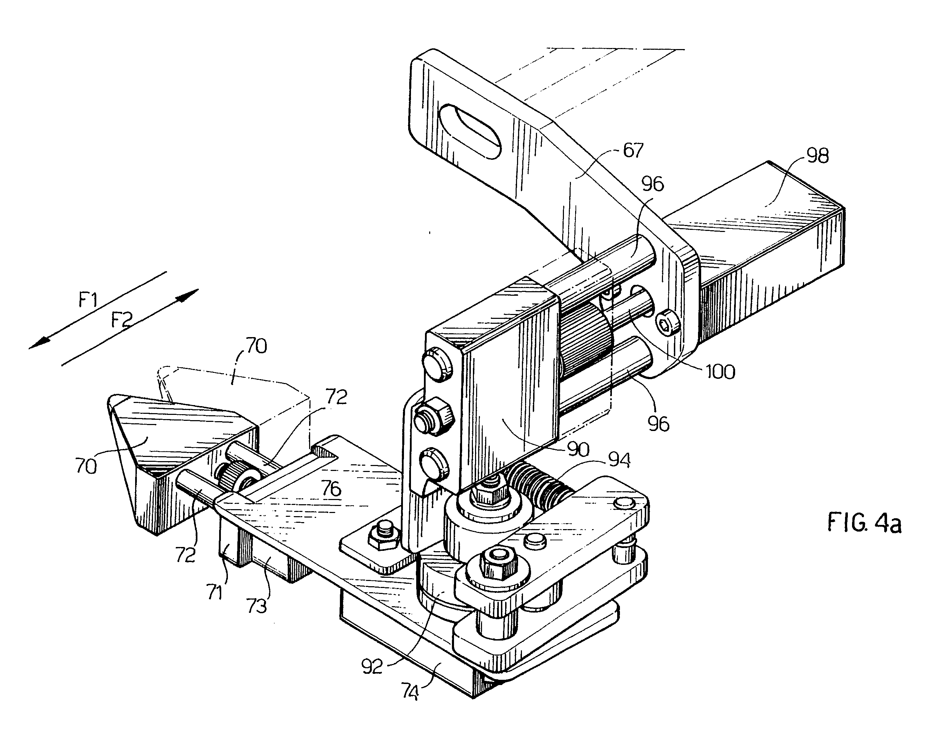

These latter are received in a sliding way into a guide 71 which is integral with a plate 76 and they are integral with a sliding block 73. A cylinder-piston unit 74 is supported on the plate 76 and has a threaded shaft 75 made integral with the block 73. The position of a threaded nut 77 on the shaft 75 can be set to define a limit of the run of the tracer head. The position of the head is set according to the footwear by means of the cylinder 74. The plate 76 is supported on a slider 90 through an articulated shock-absorber device 92, which is already known and therefore not described, brought back into position by means of a spring 94. The slider 90 is supported on sliding guides 96 on the tongue 67 and is moved from an extended position (drawn in a continuous line in figure 4a) and a retracted position (drawn in chain lines) by means of a cylinder 98 and the relative shaft 100, controlled from the rotating head 20.

It should be noted that, although the embodiment described is at present the one preferred, the invention also foresees that the member 90 can be fixed to the tongue 67 (figure 2).

The tracer unit is pushed against the last by a means 82, which can be a spring or a cylinder-piston unit, whose shaft is integral with the arm 61, 62. The movable element of a potentiometer 80 is also integral with the same arm and is supported by a support 83 integral with the fixed casing 28. The potentiometer 80 is connected to an electropneumatic transducer 84, which is already known and visible in the block diagram in figure 5, for example a EIT200 type of the SMC Corporation, which in consequence operates a cylinder-piston unit 86 (figure 8), located between the bar 88 integral with the casing 26 and the frame 34, in such a way as to operate the rotation of the latter.

When the apparatus is working, the rotating head 20 travels along the bars 22 with the double support 18, 19, first in one direction and then, after rotating through 180°, in the other direction. The motor sets the brush 56 in rotation and this is pressed onto the last 1 at the desired pressure, by the action of the cylinder-piston unit 44 and of the opposing spring 42. The head 70 of the tracer 68 rests against the last, and the horizontal displacements detected by the tracer are transmitted to the potentiometer 80 which sends a corresponding electric signal to the electropneumatic transducer 84, which operates the cylinder-piston unit 86 in a corresponding way, which thus determines the rotation of the brush supporter arm 46 and therefore of the brush shaft 52 around the axis a, in order to adjust its position to the configuration detected by the tracer. In particular, the position of the head 70 of the tracer in figure 4a will be adjusted by means of the cylinder 98, so as to be "in advance" of the position of the brush; that is to say, with reference to figure 4a, when the last 1 is running in the direction $F_1$, the head will be in the position shown in dots and dashes; the rotation of the head 20 at the end of the run will move the head, by means of the cylinder 98, into the position drawn with a continuous line, where it will follow the last during the movement in the direction $F_2$.

## Claims

1. An apparatus for carrying out an operation on an edge strip of an upper supported on a footwear last, said last and the operating tool being movable with respect to each other, said apparatus comprising:
- last supporting members (18, 19),
- a work tool,
- work tool supporting members,
characterized in that it further comprises:
- a tracer unit (68) pushed in contact with the edge to be operated,
- a frame (34) supported on a fixed framework (26) for an oscillating movement around a vertical axis (a) - the work tool being supported on said frame and adjusted angularly with it,
- a unit between said tracer and said frame to provide for the angular displacement of said frame (34) as a function of the displacement sensed by said tracer (68).

2. An apparatus according to claim 1, for roughing operation, in in which said work tool is a rotating brush or wheel (56), whose rotation shaft (52) is supported on said frame.

3. An apparatus according to claim 2, characterized in that said unit comprises a potentiometer (80), a transducer (84), and a frame rotation control actuator (86).

4. An apparatus according to claim 3, characterized in that the potentiometer is mounted between the tracer unit (68) and the fixed framework (26), and the actuator is mounted between said frame (34) and said casing.

5. An apparatus according to claim 2, characterized in that it comprises: a fixed framework (26) which defines a vertical axis of rotation (a); a frame (34) rotatable around the vertical axis and supporting a horizontal pin (36) which defines a horizontal axis of oscillation (b); a body (38) supported in an oscillating way around said horizontal pin, the support for said roughing brush being provided by an arm (46) extending from said body, integral with it and engaging said brush rotation shaft (52).

6. An apparatus according to claim 5, characterized in that the roughing brush shaft (52) is moved vertically downwards by means of a cylinder-piston (44) which acts on a rod (40) integral with said body and is opposed by a spring (42).

7. An apparatus according to claim 2, characterized in that said tracer unit (68) comprises a head (70) supported by an oscillating mounting (61, 62, 64) of the tracer.

8. An apparatus according to claim 7, characterized in that said head (70) is supported on said mounting (61, 62, 64) by means (98, 100) which allow the head to be set in at least two positions along the longitudinal axis of the last.

9. A process for adjusting the position of a work tool for operation on the edge of an upper mounted on a last, characterized in that:
- a tracer runs along the edge to be worked, whose configuration is detected by means of the displacements of the tracer (68) which is kept in contact with said edge,
- the angular displacements of said tracer are converted into angular displacements of a work tool support arm (46).

10. A process according to claim 9, characterized in that said operation is roughing and said tool is a rotating brush.

11. A process according to claim 10, characterized in that the displacements of the tracer (68) are converted into an electrical quantity in a potentiometer, the output of the potentiometer being the input of an electromechanical or electropneumatic transducer (84), whose output passes to an actuator (86) for rotating angularly a brush support (46).

12. A process according to claim 9, characterized in that the tracer is in contact with said edge "in advance" with respect to the tool.

FIG. 1

FIG. 3

## FIG. 2

FIG. 4

FIG. 5

7

FIG. 4a

EP 0 428 974 A2

FIG. 6

FIG. 7

EP 0 428 974 A2

FIG.8